(19) Europäisches Patentamt
European Patent Office
Office européen des brevets

(11) **EP 3 001 151 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(51) Int Cl.:
***G01D 18/00*** *(2006.01)*

(21) Anmeldenummer: **15184368.7**

(22) Anmeldetag: **09.09.2015**

(54) **VERFAHREN ZUR FEHLERKORREKTUR IN POSITIONSMESSEINRICHTUNGEN**

METHOD FOR ERROR CORRECTION IN POSITION MEASURING DEVICES

PROCEDE DE CORRECTION D'ERREUR DANS DES DISPOSITIFS DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2014 DE 102014219188**

(43) Veröffentlichungstag der Anmeldung:
**30.03.2016 Patentblatt 2016/13**

(73) Patentinhaber: **Dr. Johannes Heidenhain GmbH 83301 Traunreut (DE)**

(72) Erfinder:
• DRESCHER, Jörg
83122 Samerberg (DE)
• BICHLMEIER, Ulrich
84453 Mühldorf (DE)

(56) Entgegenhaltungen:
EP-A- 0 042 917     EP-A1- 1 403 625
US-B2- 8 064 974

**Beschreibung**

## GEBIET DER TECHNIK

Die vorliegende Erfindung betrifft ein Verfahren zur Fehlerkorrektur in Positionsmesseinrichtungen.

## STAND DER TECHNIK

Bekannte Positionsmesseinrichtungen umfassen üblicherweise ein oder mehrere Maßverkörperungen sowie ein oder mehrere relativ hierzu bewegliche Abtasteinheiten. Als Maßverkörperung sind dabei in der Regel Linear- oder Kreuzgittermaßstäbe mit einer darauf aufgebrachten Gitterteilung vorgesehen. Die gesuchte Position der Abtasteinheit in Bezug auf die Maßverkörperung wird durch die Abtastung der Gitterteilung mit Hilfe der Abtasteinheit bestimmt; bekannt sind hierbei neben optischen Abtastprinzipien auch magnetische, induktive und kapazitive Abtastprinzipien. Die Genauigkeit, mit der diese Position gemessen werden kann, hängt - neben weiteren Eigenschaften der Positionsmesseinrichtung - dabei maßgeblich von der Genauigkeit der Gitterteilung auf der Maßverkörperung ab. Für normale Messanwendungen lassen sich im Fall einer optischen Abtastung entsprechende Gitterteilungen in hinreichend hoher Genauigkeit herstellen, so dass keine weiteren Korrekturen erforderlich sind. In Hochpräzisions-Messanwendungen, wie z.B. in Lithographie-Maschinen zur Belichtung von Wafern, muss jedoch die Position mit äußerster Genauigkeit erfasst werden; hierzu sind in der Regel weitere Korrekturmaßnahmen erforderlich.

Bekannt ist in diesem Zusammenhang, für die verwendeten Maßverkörperungen während der Produktion derselbigen oder in speziellen Kalibrierverfahren Korrekturtabellen für die einzelnen Maßverkörperungen zu erstellen. Derartige Korrekturtabellen beschreiben dabei die Abweichung zwischen der über die Abtasteinheit und die Maßverkörperungsabtastung erfassten Position und der physikalischen Position; hierzu sei beispielsweise auf die US 2008/105026 A1 verwiesen. Während des eigentlichen Messbetriebs wird dann in einem ersten Schritt ein unkorrigierter Positionswert durch Abtasten der Maßverkörperung mit einer oder mehrerer Abtasteinheiten bestimmt. In einem weiteren, zusätzlichen Korrekturschritt wird dann zur Bildung eines korrigierten Positionswertes dem gemessenen, unkorrigierten Positionswert ein Korrekturwert aus der Korrekturtabelle hinzugefügt, beispielsweise aufaddiert oder anderweitig verrechnet.

In derartigen Hochpräzisions-Messanwendungen werden die von der Positionsmesseinrichtung erzeugten Positionswerte üblicherweise in Echtzeit weiterverarbeitet, z.B. in einer nachgeordneten Regelung zur Positionierung eines Tisches in einer Lithographie-Maschine. Es ist daher erforderlich, dass die Bildung des korrigierten Positionswertes ebenfalls in Echtzeit und mit möglichst geringer zusätzlicher Verarbeitungszeit erfolgt. In hochdynamischen Anwendungen stehen hierfür üblicherweise nur wenige Mikrosekunden zur Verfügung.

Hochgenaue Positionsmesseinrichtungen benötigen in derartigen Anwendungen typische Positionsauflösungen von wenigen 10 Pikometern, d.h. auch die verwendete Korrekturtabelle muss diese Auflösung besitzen.

Um eine ausreichende Genauigkeit zur Verfügung zu stellen, müssen die Korrekturwerte in der Korrekturtabelle mit einem Korrekturabstand von ca. 0,1mm - 1 mm bereit gestellt werden. In Anwendungen, in denen als Maßverkörperungen zweidimensionale Maßstabsplatten zum Einsatz kommen, müssen die Korrekturwerte ebenfalls zweidimensional für den gesamten Messbereich vorliegen. Hierdurch ergibt sich zum einen, dass üblicherweise Korrekturtabellen mit mehreren Millionen einzelnen Korrekturwerten erforderlich sind; zum anderen sind aufgrund der geforderten hohen Positionsauflösung im Pikometerbereich zur binären Darstellung eines einzelnen Korrekturwertes 16 oder mehr Bits erforderlich. Es resultiert damit ein erheblicher Speicherbedarf mit zunehmender Größe derartiger Korrekturtabellen.

Den Positionsmesseinrichtungen sind üblicherweise Signalverarbeitungseinheiten zur Verarbeitung der erzeugten Signale zugeordnet, die je nach Anwendungsfall in der Nähe der Abtasteinheiten oder aber auch weiter davon entfernt platziert sein können. Auf Seiten der Signalverarbeitungseinheit ist neben verschiedenen Signalverarbeitungsbausteinen u.a. auch die Speichereinheit angeordnet, in der ein oder mehrere Korrekturtabellen abgelegt sind. Bei diesen Signalverarbeitungseinheiten handelt es sich häufig um sog. Embedded-Systeme, welche auf eine schnelle Berechnung und Weitergabe der korrigierten Positionswerte über eine Hochgeschwindigkeits-Schnittstelle an eine Regelung optimiert sind. So sollte in den erwähnten Anwendungen die Zeit zwischen der Abtastung und der Übertragung des korrigierten Positionswertes möglichst gering sein und typischerweise im Bereich weniger Mikrosekunden liegen. Dies lässt sich nur mit digitalen Signalprozessoren oder programmierbaren Logikbausteinen in der Signalverarbeitungseinheit gewährleisten, an die nur in begrenztem Umfang Speichereinheiten für die erforderlichen Korrekturtabellen angeschlossen werden können.

Die Auswerteeinheit ist in derartigen Systemen oftmals über eine weitere Schnittstelle, z.B. einen geeigneten Feldbus, mit einer übergeordneten Maschinensteuerung verbunden. Über diese Schnittstelle erfolgt u.a. auch die Übertragung der Korrekturtabellen in die Speichereinheit der entsprechenden Signalverarbeitungseinheit. Die Schnittstelle ist hierbei üblicherweise nicht als Hochgeschwindigkeits-Schnittstelle bzw. nicht für einen hohen Datendurchsatz ausgebildet. Da über diese Schnittstelle zudem oftmals mehrere Signalverarbeitungseinheiten mehrerer Positionsmesseinrichtungen mit der übergeordneten Maschinensteuerung verbunden sind, kann die Übertragung einer Vielzahl umfangreicher Korrekturtabellen an die verschiedenen Signalverarbeitungseinheiten eine erhebliche Zeit in Anspruch nehmen. Während dieser Zeit stehen die Speichereinheiten mit den Korrekturtabellen nicht für eine Messwertkorrektur bzw. nicht für den Messbetrieb zur Verfügung.

Aus der EP 0 042 917 A2 ist ein Interpolationsverfahren für digitale Längen-oder Winkelmesssysteme bekannt, bei dem ein von einer Abtasteinheit erzeugtes Abtastsignal digitalisiert und einem Rechner zur Bildung von Interpolationswerten zugeführt wird. Vor der Durchführung des Interpolationsvorgangs werden über den Rechner noch Korrekturen an den digitalisierten Werten vorgenommen, etwa bezüglich des Gleichspannungsanteils, der Amplitudengleicheheit und der Phasendifferenz der Analogsignale. Hierzu werden Korrekturwerte in wenigstens einem Durchlauf über die jeweilige Messlänge ermittelt, im Rechner gespeichert und im Messbetrieb bei der Interpolation vom Rechner automatisch verwertet.

## ZUSAMMENFASSUNG DER ERFINDUNG

Der vorliegenden Erfindung liegt die Aufgabe zugrunde, ein Verfahren zur Fehlerkorrektur in Positionsmesseinrichtungen anzugeben, das möglichst geringe Anforderungen an die Speicherkapazität der zugehörigen Signalverarbeitungseinheiten in Bezug auf die verwendeten Korrekturtabellen stellt. Ferner sollte die Zeitdauer für die Übertragung derartiger Korrekturtabellen an die Signalverarbeitungseinheit der Positionsmesseinrichtung minimiert werden.

Diese Aufgabe wird erfindungsgemäß durch ein Verfahren zur Fehlerkorrektur mit den Merkmalen des Anspruchs 1 bzw. des Anspruchs 6 gelöst.

Vorteilhafte Ausführungen des erfindungsgemäßen Verfahrens ergeben sich aus den Maßnahmen, die in den abhängigen Ansprüchen aufgeführt sind.

Das erfindungsgemäße Verfahren zur Fehlerkorrektur in Positionsmesssystemen mit Maßverkörperungen, die von mindestens einer Abtasteinheit abgetastet werden, sieht vor, dass für eine definierte Anzahl von Korrekturpunkten auf der Maßverkörperung jeweils Korrekturwerte bereitgehalten werden, die aus einer vor dem Messbetrieb erfolgenden Kalibrierung gewonnen und im Messbetrieb zur Korrektur der ermittelten Positionswerte verwendet werden. Die bei der Kalibrierung gewonnenen Korrekturwerte werden für den Messbetrieb komprimiert.

Es ist dabei möglich, dass zur Komprimierung entweder die Anzahl und/oder die Datenwortbreite der Korrekturwerte reduziert wird.

Hierbei kann vorgesehen werden, dass zur Komprimierung der aus der Kalibrierung gewonnenen Korrekturwerte

- lediglich zu einem Teil der verfügbaren Korrekturpunkte auf der Maßverkörperung die jeweils zugehörigen Korrekturwerte ausgewählt und in einer Teil-Korrekturtabelle abgelegt werden und
- in einer Zuordnungstabelle Zuordnungsinformationen abgelegt werden, über die im Messbetrieb eine Zuordnung der in der Teil-Korrekturtabelle abgelegten Korrekturwerte zu den Korrekturpunkten vorgenommen wird.

Vorzugsweise werden dabei lediglich zu denjenigen Korrekturpunkten auf der Maßverkörperung Korrekturwerte ausgewählt und in der Teil-Korrekturtabelle abgelegt, die in einem Teilbereich der Maßverkörperung liegen, der im Messbetrieb von der Abtasteinheit abgetastet wird.

Mit Vorteil weist der Teilbereich auf der Maßverkörperung oder die Maßverkörperung eine nicht-rechteckförmige Kontur auf.

Es ist desweiteren möglich, dass die Teil-Korrekturtabelle und die Zuordnungstabelle in einer Speichereinheit abgelegt werden, auf die eine Signalkorrektureinheit im Messbetrieb zugreift, um die ermittelten Positionsmesswerte zu korrigieren und zur Weiterverarbeitung bereitzustellen.

Dabei kann vorgesehen sein, dass über die in der Zuordnungstabelle abgelegten Zuordnungsinformationen jeweils die Speicherstelle in der Speichereinheit angegeben wird, an der die Korrekturwerte der ausgewählten Korrekturpunkte abgelegt sind.

Ferner kann im Messbetrieb über eine Zuordnungsvorschrift zu einer gegebenen Position auf der Maßverkörperung die Speicherstelle des Korrekturwerts mindestens eines nächst- oder umliegenden Korrekturpunkts in der Teil-Korrekturtabelle bestimmt werden.

Es ist darüberhinaus auch möglich, dass zur Komprimierung der aus der Kalibrierung gewonnenen Korrekturdaten

- mehrere Gruppen von lokal benachbarten Korrekturpunkten auf der Maßverkörperung gebildet werden, zu denen jeweils Korrekturwerte aus der Kalibrierung vorhanden sind und
- pro Gruppe ein lokaler Gruppen-Korrekturwert bestimmt wird und die Gruppen-Korrekturwerte in einer Gruppen-Korrekturwerttabelle abgelegt werden und

- die über die Kalibrierung gewonnenen Korrekturwerte jeder Gruppe mit dem jeweils zugehörigen Gruppen-Korrekturwert verrechnet werden und dabei Verrechnungs-Korrekturwerte mit verringerter Datenwortbreite gebildet und in einer Verrechnungs-Korrekturwerttabelle abgelegt werden und
- im Messbetrieb über die Verrechnungs-Korrekturwerttabelle und die Gruppen-Korrekturwerttabelle die ermittelten Positionswerte korrigiert werden.

Hierbei kann vorgesehen sein, dass als Gruppen-Korrekturwert der niedrigste Korrekturwert in der Gruppe oder der mittlere Korrekturwert in der Gruppe oder der Mittelwert aus den Maximal- und Minimalwerten der Korrekturwerte einer Gruppe bestimmt wird.

Ferner ist dabei möglich, dass zur Verrechnung der Korrekturwerte mit dem jeweils zugehörigen Gruppen-Korrekturwert eine Differenzbildung erfolgt.

Es kann auch vorgesehen werden, dass desweiteren

- mindestens ein Extremwert-Korrekturpunkt auf der Maßverkörperung ermittelt wird, dessen zugehöriger Korrekturwert um einen definierten Betrag von den Korrekturwerten der benachbarten Korrekturpunkte abweichen und
- in der Verrechnungs-Korrekturwerttabelle für den Extremwert-Korrekturpunkt anstelle des Korrekturwerts ein Hilfswert abgelegt wird und
- Zuordnungsinformationen zum Extremwert-Korrekturpunkt zusammen mit Korrekturwerten des Extremwert-Korrekturpunkts in einer Extremwert-Korrekturtabelle abgelegt werden, wobei über die Zuordnungsinformationen im Messbetrieb eine Zuordnung von abgelegten Korrekturwerten zu Extremwert-Korrekturpunkten erfolgt.

Hierbei kann als Hilfswert in der Verrechnungs-Korrekturwerttabelle ein Markerwert abgelegt werden, der mit keinem anderen Korrekturwert übereinstimmt.

Es ist ferner möglich, dass als Korrekturwert für den Extremwert-Korrekturpunkt der aus der Kalibrierung gewonnene Korrekturwert oder ein Extremwert-Verrechnungskorrekturwert in der Extremwert-Korrekturtabelle abgelegt wird.

Als besonders vorteilhaft erweist sich beim erfindungsgemäßen Verfahren, dass darüber das Volumen der verwendeten Korrekturtabellen erheblich verringert werden kann. Es muss damit weniger Speicherplatz vorgesehen werden, was wiederum eine Kostenreduzierung entsprechender Systeme zur Folge hat. Beim Abspeichern der Korrekturtabellen können auf dem gleichen Speicherplatz nunmehr deutlich mehr Informationen untergebracht werden; der ggf. nicht benötigte Speicherplatz kann in der Signalverarbeitungseinheit für andere Zwecke genutzt werden. Neben den reduzierten Anforderungen an die Speicherkapazität der genutzten Speichereinheit resultieren darüber hinaus auch insbesondere deutlich verringerte Übertragungsdauern, wenn entsprechende Korrekturtabellen von einer übergeordneten Maschinensteuerung innerhalb kürzerer Zeit an die Signalverarbeitungseinheit übertragen werden. Desweiteren können existierende Systeme mit einer Möglichkeit zur Verwendung von Korrekturtabellen ausgestattet werden, in denen dies aufgrund eines limitierten Speicherplatzes bislang nicht möglich war.

Weitere Einzelheiten und Vorteile der vorliegenden Erfindung seien anhand der nachfolgenden Beschreibung von Ausführungsbeispielen des erfindungsgemäßen Verfahrens in Verbindung mit den Figuren erläutert.

## KURZE BESCHREIBUNG DER ZEICHNUNGEN

Es zeigt

Figur 1          eine stark schematisierte Blockschaltbilddarstellung eines Systems aus Positionsmesseinrichtung und weiteren Komponenten, welches zur Durchführung des erfindungsgemäßen Verfahrens geeignet ist;

Figur 2          eine stark schematisierte Draufsicht auf einen Teil der zweidimensionalen Maßverkörperung der Positionsmesseinrichtung aus Figur 1;

Figur 3          eine schematische Darstellung der zweidimensionalen Maßverkörperung inclusive der Korrekturpunkte, zu denen in einem Kalibriervorgang Korrekturwerte bestimmt wurden;

Figur 4a, 4b     jeweils eine schematische Darstellung der zweidimensionalen Maßverkörperung zur Erläuterung einer ersten Ausführungsform des erfindungsgemäßen Verfahrens;

Figur 5a, 5b     je eine schematische Darstellung zur Erläuterung der Ablage der Korrekturdaten in der ersten Ausführungsform des erfindungsgemäßen Verfahrens;

Figur 6 eine schematische Darstellung der zweidimensionalen Maßverkörperung zur Erläuterung einer zweiten Ausführungsform des erfindungsgemäßen Verfahrens;

Figur 7a, 7b, 7c jeweils weitere schematische Darstellungen zur Erläuterung der zweiten Ausführungsform des erfindungsgemäßen Verfahrens;

Figur 8a, 8b, 8c jeweils weitere schematische Darstellungen zur Erläuterung einer ersten Variante der zweiten Ausführungsform des erfindungsgemäßen Verfahrens.

## BESCHREIBUNG DER AUSFÜHRUNGSFORMEN

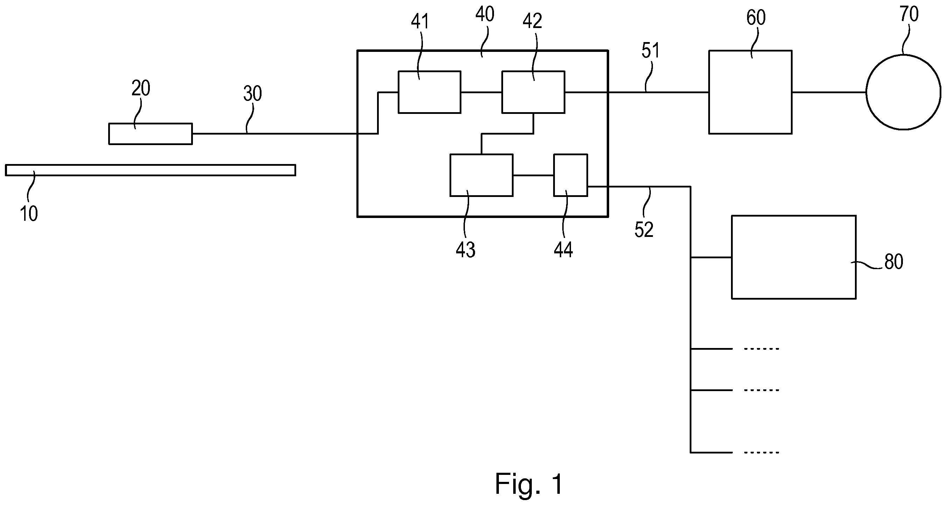

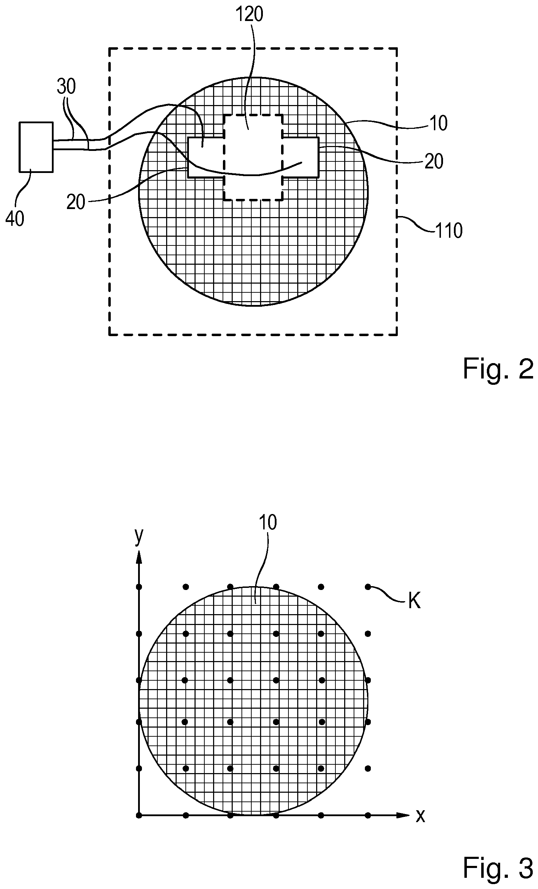

In Figur 1 ist in einer stark schematisierten Blockschaltbilddarstellung ein System aus einer Positionsmesseinrichtung und weiteren Komponenten gezeigt, welches zur Durchführung des erfindungsgemäßen Verfahrens geeignet ist; Figur 2 zeigt eine Draufsicht auf einen Teil der Maßverkörperung 10 dieser Positionsmesseinrichtung inclusive zweier Abtasteinheiten 20.

Die dargestellte Positionsmesseinrichtung umfasst eine Maßverkörperung 10 sowie zwei relativ hierzu bewegliche Abtasteinheiten 20. Die Maßverkörperung 10 einerseits und die Abtasteinheiten 20 andererseits sind mit in Figur 2 strichliniert angedeuteten Maschinenkomponenten 110, 120 verbunden, die relativ zueinander positioniert werden müssen. Beispielsweise kann es sich hierbei um den stationären Maschinenrahmen 120 und einen demgegenüber beweglichen Tisch 110 einer Lithographiemaschine zur Halbleiterfertigung handeln.

Die Maßverkörperung 10 ist im dargestellten Beispiel als zweidimensionale Maßverkörperung in Form eines Auflicht-Kreuzgitters ausgebildet. Diese wird mit Hilfe der Abtasteinheiten 20 optisch abgetastet, um bei einer Relativbewegung von Maßverkörperung 10 und Abtasteinheiten 20 Positionssignale zu erzeugen. Im Hinblick auf ein geeignetes Abtastprinzip der verwendeten Positionsmesseinrichtung sei beispielsweise auf die EP 1 762 828 A2 der Anmelderin verwiesen. Die dort offenbarte Abtastung bietet dabei die besonders vorteilhafte Möglichkeit, unter Verwendung von zwei Abtasteinheiten gleichzeitig Positionsinformationen zur Relativbewegung der Maschinenkomponenten entlang zweier Bewegungsrichtungen zu erfassen. Selbstverständlich ist dieses Abtastprinzip unter Verwendung zweier Abtasteinheiten nicht zwingend für die vorliegende Erfindung, d.h. es kann auch lediglich eine einzige Abtasteinheit vorgesehen werden.

In der Draufsicht der Figur 2 ist lediglich der für die vorliegende Messaufgabe relevante Bereich der zweidimensionalen Maßverkörperung 10 dargestellt, der hier eine i.w. kreisförmige Form hat; die komplette Maßverkörperung 10 erstreckt sich in der Praxis jedoch üblicherweise über diesen Bereich hinaus. Je nach Messaufgabe kann die zweidimensionale Maßverkörperung 10 dabei ein- oder mehrteilig ausgebildet sein.

Über eine Verbindungsleitung 30 werden die erzeugten Positionssignale von den Abtasteinheiten 20 an eine nachgeordnete Signalverarbeitungseinheit 40 übertragen, die z.B. in der Nähe der zueinander beweglichen Komponenten in der Maschine angeordnet ist. Mit Hilfe der Signalverarbeitungseinheit 40 erfolgt i.w. die Weiterverarbeitung und Umwandlung der erzeugten Positionssignale in Positionswerte, die dann über eine erste Schnittstelle 51 an eine Regelungseinheit 60 übergeben bzw. übertragen werden. Die Regelungseinheit 60 steuert ausgangsseitig einen Antrieb 70 an, mit dem der Tisch 110 in der Maschine positioniert wird.

In der Positionsbestimmungseinheit 41 erfolgt in einem ersten Verarbeitungsschritt die Bestimmung eines zunächst noch unkorrigierten Positionswertes aus den übertragenen Positionssignalen der Abtasteinheiten 20. Der ermittelte Positionswert wird dann an eine Signalkorrektureinheit 42 übergeben, in der dieser Positionswert mit den in einer Speichereinheit 43 abgelegten Korrekturwerten der verwendeten Maßverkörperung 10 korrigiert wird. Dies kann etwa durch eine geeignete Verrechnung der unkorrigierten Positionswerte mit den in der Speichereinheit 43 abgelegten Korrekturwerten erfolgen; letztere werden in der Speichereinheit 43 vorzugsweise als digitale Datenwörter abgelegt. Die Korrekturwerte werden vor dem Messbetrieb über eine geeignete Kalibrierung bzw. hochgenaue Vermessung der Maßverkörperung 10 gewonnen und in komprimierter Form in der Speichereinheit 43 abgelegt, wie nachfolgend noch im Detail erläutert wird. Der korrigierte Positionswert wird dann von der Signalkorrektureinheit 42 über die erste Schnittstelle 51 an die Regelungseinheit 60 übertragen. Da es sich bei der Tisch-Positionierung um eine zeitkritische Regelungsaufgabe handelt, ist die erste Schnittstelle 51 vorzugsweise als Hochgeschwindigkeits-Schnittstelle ausgebildet, über die in kurzer Zeit große Datenmengen übertragbar sind. Typische Übertragungszeiten der ersten Schnittstelle 51 liegen dabei im Bereich weniger Mikrosekunden.

Auf Seiten der Signalverarbeitungseinheit 40 ist desweiteren noch eine Überwachungseinheit 44 vorgesehen, die die Konfiguration und Überwachung der Signalverarbeitungseinheit 40 übernimmt. Zu den Aufgaben der Überwachungseinheit 44 gehört desweiteren auch das Übertragen der Korrekturwerte aus der Maschinensteuerung 80 über eine zweite Schnittstelle 52 in die Speichereinheit 43. Die zweite Schnittstelle 52 ist hierbei als Feldbus ausgebildet, über die die Maschinensteuerung 80 noch mit weiteren - nicht in der Figur dargestellten - Komponenten in der Maschine verbunden ist; hierzu können beispielsweise auch noch weitere Positionsmesseinrichtungen, Regelungseinheiten etc.

gehören.

Wie bereits angedeutet, werden die bei der Kalibrierung der Maßverkörperung 10 gewonnenen Korrekturwerte für eine definierte Anzahl von Korrekturpunkten auf der Maßverkörperung 10 erfindungsgemäß komprimiert. Dadurch kann zum einen der Aufwand für die erforderliche Speichereinheit 43 in der Signalverarbeitungseinheit 40 verringert werden. Zum anderen lässt sich darüber die erforderliche Zeit für die Übertragung der Korrekturwerte von der Maschinensteuerung 80 über die zweite Schnittstelle 52 zur Speichereinheit 43 deutlich minimieren. Die Totzeiten für die Nutzung der Speichereinheit 43 können auf diese Art und Weise erheblich verringert werden. Wie anhand der nachfolgenden Beschreibung von Ausführungsbeispielen des erfindungsgemäßen Verfahrens noch im Detail erläutert wird, ist dabei zur Komprimierung der Korrekturwerte vorgesehen, die Anzahl und/oder die Datenwortbreite der Korrekturwerte zu reduzieren.

Bei der vor dem Messbetrieb erfolgenden Kalibrierung der fehlerbehafteten Maßverkörperung 10 wird über die Maßverkörperung 10 ein Raster von diskreten Korrekturpunkten K gelegt, wie dies in der schematisierten Darstellung von Figur 3 für die Maßverkörperung 10 aus den Figuren 1 und 2 veranschaulicht wird. Im vorliegenden Beispiel liegen die Korrekturpunkte K in einem Raster mit gleichmäßigen Abständen von 1 mm zwischen benachbarten Korrekturpunkten K auf der Maßverkörperung 10. Zu jedem der Korrekturpunkte K wird dann bei der Kalibrierung ein numerischer Korrekturwert bestimmt, mit dem während des Messbetriebs der jeweilige ermittelte Positionswert verrechnet wird, um einen korrigierten Positionswert für die Weiterverarbeitung bereitzustellen. Die Korrekturwerte werden hierbei als digitale Datenwörter mit einer definierten Datenwortbreite in einer geeigneten Korrekturtabelle in der Speichereinheit 43 abgelegt bzw. abgespeichert.

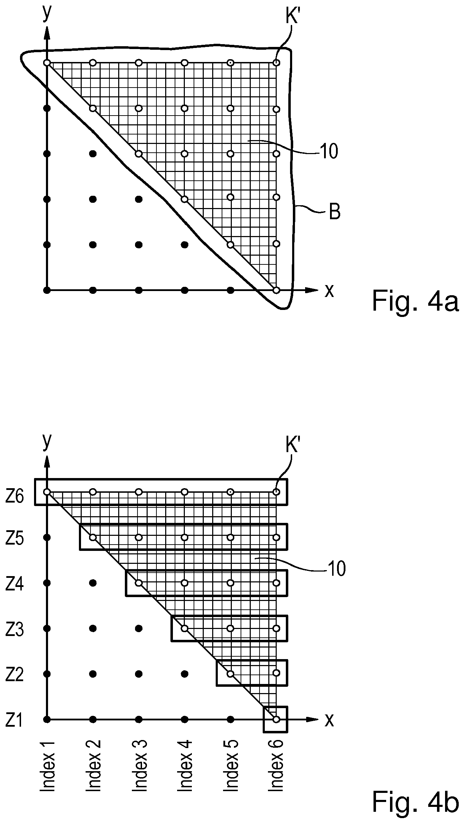

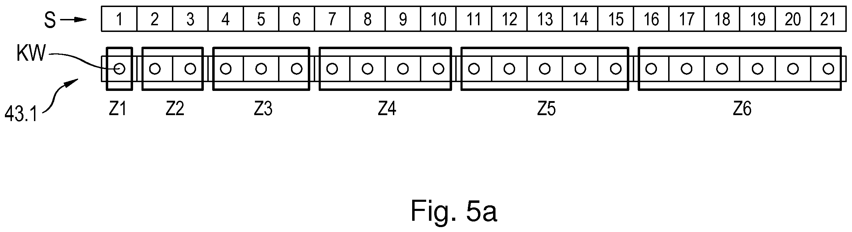

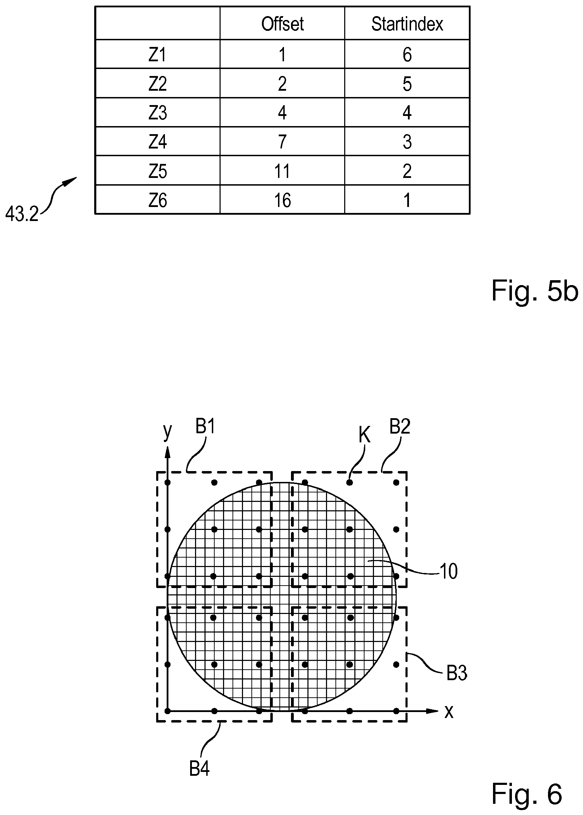

Gemäß dem Stand der Technik erfolgt das Ablegen der Korrekturwerte in zweidimensionalen Matrizen, wobei ein Matrizeneintrag einem Korrekturwert an einer bestimmten xy-Position der Maßverkörperung 10 entspricht. Die entsprechende Matrix wird z.B. in einer geeigneten Speichereinheit sequentiell abgelegt, woraus im Fall einer hohen Anzahl von Korrekturpunkten K bei einer großen Datenwortbreite die eingangs erläuterten Probleme wegen der großen resultierenden Datenmengen resultieren. Das Ablegen der Korrekturpunkte K in Matrizen hat den Vorteil einer einfachen und schnellen Verarbeitung in der Signalverarbeitungseinheit 40. Damit alle Korrekturpunkte K in den Matrizen abgelegt werden können, müssen die Matrizen so dimensioniert werden, dass sie ein umschreibendes Rechteck aller relevanten Korrekturpunkte K' bilden. Wenn nun die Maßverkörperung 10 eine nicht rechtwinklige Struktur aufweist oder die Abtasteinheiten 20 in der Anwendung nicht die komplette Maßverkörperung 10 in einem rechtwinkeligen Bereich überfahren, so beinhaltet die Matrix Korrekturpunkte K, die in der Anwendung nicht verwendet werden. Je nach Anwendung kann somit sehr viel Speicher unnötigerweise belegt werden. Erfindungsgemäß ist daher ein Komprimieren der Korrekturwerte vorgesehen, indem die Zahl der abgelegten Korrekturwerte verringert und/oder die Datenwortbreite reduziert wird. Ein erstes Ausführungsbeispiel des erfindungsgemäßen Verfahrens zur Komprimierung der Korrekturwerte, mit dem sich i.w. die Anzahl der abzulegenden Korrekturwerte erheblich reduzieren lässt, wird anhand der Figuren 4a, 4b, 5a und 5b nachfolgend im Detail erläutert.

So ist hier vorgesehen, dass nicht alle verfügbaren Korrekturwerte zu allen Korrekturpunkten K der Maßverkörperung 10 in einer Speichereinheit abgelegt werden; es erfolgt vielmehr eine Auswahl von Korrekturwerten, die lediglich zu einem Teil aller verfügbaren Korrekturpunkte K' auf der Maßverkörperung 10 gehören. Die entsprechenden Korrekturwerte eines Teils aller verfügbaren Korrekturwerte werden dann in einer Teil-Korrekturtabelle zur Maßverkörperung 10 abgelegt. Zur Nutzung der Teil-Korrekturtabelle im Messbetrieb ist darüber hinaus noch eine weitere Tabelle in Form einer Zuordnungstabelle vorgesehen, in der Zuordnungsinformationen abgelegt werden, über die im Messbetrieb eine Zuordnung der in der Teil-Korrekturtabelle abgelegten Korrekturwerte zu den Korrekturpunkten K' vorgenommen wird.

Ausgewählt werden dabei lediglich die Korrekturwerte derjenigen Korrekturpunkte K' auf der Maßverkörperung 10, die in einem Teilbereich B der Maßverkörperung 10 liegen, der im Messbetrieb auch tatsächlich von den Abtasteinheiten 20 abgetastet wird. Je nach vorliegender Messaufgabe und Verfahrbereich des beweglichen Objektes kann etwa lediglich die Abtastung der Maßverkörperung 10 in einem Teilbereich B vorgesehen sein, der deutlich kleiner als die Gesamt-Ausdehnung der Maßverkörperung 10 ist. In Figur 4a ist diese Situation beispielhaft veranschaulicht. So ist hier vorgesehen, nur diejenigen Korrekturpunkte K' aus einem in etwa dreieckigen Teilbereich B der Maßverkörperung 10 auszuwählen und in einer geeigneten Teil-Korrekturtabelle abzulegen, anstelle sämtliche verfügbaren Korrekturwerte aller Korrekturpunkte in einer vollständigen Korrekturtabelle abzulegen. Generell erweist sich diese Variante des erfindungsgemäßen Verfahrens besonders geeignet zur Komprimierung der Korrekturwerte, wenn die jeweilige Messaufgabe die Auswahl von Korrekturpunkten K' aus einem Teilbereich B der Maßverkörperung 10 erlaubt, der eine nicht-rechteckförmige Kontur aufweist oder aber die Maßverkörperung 10 eine nicht-reckförmige Kontur aufweist. Wie aus Figur 4a ersichtlich, reduziert dieses Vorgehen die Anzahl der abzulegenden Korrekturwerte und damit den resultierenden Speicherbedarf in der vorgesehenen Speichereinheit 43 in etwa auf die Hälfte.

Anhand der Figuren 4b, 5a, 5b wird nunmehr die Ablage der Korrekturwerte in der Teil-Korrekturtabelle 43.1 sowie die zum Auslesen derselbigen vorgesehene Zuordnungstabelle 43.2 gemäß dem ersten Ausführungsbeispiel des erfindungsgemäßen Verfahrens an einem stark vereinfachten Beispiel erläutert. Dabei werden die ausgewählten Korrekturwerte KW der Korrekturpunkte K' zeilenweise oder spaltenweise nacheinander in der Teil-Korrekturtabelle 43.1 in der Speichereinheit 43 an den jeweiligen Speicherstellen S = 1 - 21 abgelegt. Dies ist in Figur 5a schematisiert für die sechs Zeilen Z1 - Z6 aus dem Teilbereich B mit den relevanten Korrekturwerten KW gemäß Figur 4b veranschaulicht. Aus der ersten Zeile Z1 wird etwa lediglich ein einziger Korrekturwert KW an der Speicherstelle S = 1 in der Teil-Korrekturtabelle 43.1 abgelegt, aus der zweiten Zeile Z2 sind zwei Korrekturwerte KW an den Speicherstellen S = 2, S = 3 in der Teil-Korrekturtabelle 43.1 abgelegt usw.. Nur diese abgelegten Korrekturwerte KW gehören zu Korrekturpunkten K' aus dem im Messbetrieb relevanten Teilbereich B der Maßverkörperung 10.

Die einzelnen Korrekturwerte KW werden in Figur 5a lediglich schematisiert durch ein Kreissymbol veranschaulicht. Tatsächlich handelt es sich bei den Korrekturwerten KW wie vorher bereits erwähnt um digitale Datenwörter mit einer bestimmten Datenwortbreite, z.B. 16 oder 32 Bit. Die Datenwörter repräsentieren jeweils einen numerischen Korrekturwert KW für den zugehörigen Korrekturpunkt K' auf der Maßverkörperung 10.

Im Messbetrieb erweist sich aufgrund der hohen zeitlichen Anforderungen an die Positionsregelung dann als vorteilhaft, wenn ohne großen Rechenaufwand, die zugehörigen Korrekturwerte KW zu einzelnen xy-Positionen auf der Maßverkörperung 10 aus der Teil-Korrekturtabelle 43.1 bestimmt werden können. Die Signalkorrektureinheit 42 greift dazu auf die in der Speichereinheit 43 abgelegte Teil-Korrekturtabelle 43.1 und die Zuordnungstabelle 43.2 zu, um die ermittelten Positionswerte zu korrigieren und für die Weiterverarbeitung bereitzustellen. Zu diesem Zweck ist im vorliegenden Ausführungsbeispiel die bereits erwähnte Zuordnungstabelle 43.2 vorgesehen, die ebenfalls in der Speichereinheit 43 abgelegt wird und deren möglicher Aufbau schematisch für das erste Ausführungsbeispiel des erfindungsgemäßen Verfahrens in Figur 5b dargestellt ist.

So sind in der Zuordnungstabelle 43.2 für jede Zeile Z1 - Z6 der Teil-Korrekturtabelle 43.1 bestimmte Zuordnungsinformationen, enthalten die im vorliegenden Beispiel in Figur 5b als "Offset" und "Startindex" bezeichnet werden und spaltenweise den einzelnen Zeilen Z1 - Z6 zugeordnet sind. Über die Zuordnungsinformation "Offset" wird dabei jeweils diejenige Speicherstelle S in der Speichereinheit 43 bzw. in der Teil-Korrekturtabelle 43.1 angegeben, an der der erste Korrekturwert der entsprechenden Zeile Z1 - Z6 als digitales Datenwort abgelegt wird. Die in einer weiteren Spalte abgelegte Zuordnungsinformation "Startindex" gibt an, zu welchem ausgewählten Korrekturpunkt K' in der jeweiligen Zeile Z1 - Z6 der erste Korrekturwert KW dieser Zeile Z1 - Z6 gehört. Wie aus Figur 4b ersichtlich, läuft der Startindex von links ausgehend und einem Wert Startindex = 1 entlang der x-Achse nach rechts bis zu einem Wert Startindex = 6.

Im Messbetrieb lässt sich mittels einer derartigen Zuordnungstabelle 43.2 eindeutig und ohne großen Rechenaufwand ein Korrekturwert KW zu einer vorgegebenen xy-Position auf der Maßverkörperung 10 bestimmen und der ermittelte Positionswert damit korrigieren. Zu diesem Zweck muss zu einer gegebenen Position auf der Maßverkörperung 10 mit definierten x- und y-Koordinaten die Speicherstelle S des Korrekturwerts mindestens eines nächst- oder umliegenden Korrekturpunkts K' in der Teil-Korrekturtabelle bestimmt werden. Alternativ hierzu ist auch möglich, mehrere, z.B. 4, nächst- bzw. umliegende Korrekturpunkte zu verwenden und zu interpolieren. Die Korrekturwerte der mehreren Korrekturpunkte K' werden dann zu einem Korrekturwert an der aktuellen Position der Maßverkörperung 10 verrechnet. Die entsprechende Zuordnungsvorschrift für einen Punkt mit den Koordinaten x, y auf der Maßverkörperung 10 lautet für das vorliegende Beispiel dabei gemäß folgender Beziehung 1:

$$S(x, y) = \text{Startadresse} + m - n + x \qquad (\text{Gl. 1})$$

mit:

$S(x, y) :=$      Speicherstelle eines Korrekturwerts in der Teil-Korrekturtabelle zu einem Korrekturpunkt auf der Maßverkörperung, der am nächsten zu einem Punkt mit den Koordinaten x, y liegt

Startadresse:      Speicherstelle, ab der in Speichereinheit die Teil-Korrekturtabelle abgelegt ist

$m :=$      Offset-Wert zu gerundetem y-Koordinatenwert aus Zuordnungstabelle

$n :=$      Startindex-Wert zu gerundetem y-Koordinatenwert aus Zuordnungstabelle

$x :=$      gerundeter x-Koordinatenwert des jeweiligen Punkts

Für einen Punkt auf der Maßverkörperung mit den Koordinaten x = 5.4mm; y = 4.2mm ergibt sich die gesuchte Speicherstelle S des zugehörigen Korrekturwerts KW in der Teil-Korrekturtabelle mit einer Startadresse = 1000, m = Offsetwert(y=4) = 7, n = Startindex-Wert(y=4) = 3 folgendermaßen:

$$S(x = 5.4mm; y = 4.2mm) = 1000 + 7 - 3 + 5 = 1009$$

Die Signalkorrektureinheit 42 greift dann im Messbetrieb auf den an dieser Speicherstelle in der Teil-Korrekturtabelle 43.1 der Speichereinheit 43 abgelegten Korrekturwert KW zurück und verrechnet bzw. korrigiert den ermittelten Positionswert mit Hilfe dieses Korrekturwerts KW.

In einer Abwandlung dieses Ausführungsbeispiels kann vorgesehen werden, die Zuordnungstabelle 43.2 noch weiter zu verkleinern Hierzu werden die beiden Spalten "Offset" und "Startindex" aus der Zuordnungstabelle 43.2 gemäß Figur 5b durch die Differenzbildung der Werte in beiden Spalten gemäß OS = Offset-Wert - Startindex-Wert zu einer einzigen Spalte zusammengefasst, die dann die einzige Zuordnungsinformation OS darstellt.

Die entsprechende Zuordnungsvorschrift für die Speicherstelle S des Korrekturwerts zu einem Punkt mit den Koordinaten x, y auf der Maßverkörperung 10 lautet dann für das vorliegende Beispiel gemäß folgender Beziehung 2:

$$S(x, y) = \text{Startadresse} + O + x \qquad\qquad (\text{Gl. 2})$$

mit:

$S(x, y) :=$     Speicherstelle eines Korrekturwerts in der Teil-Korrekturtabelle zu einem Korrekturpunkt auf der Maßverkörperung, der am nächsten zu einem Punkt mit den Koordinaten x, y liegt

Startadresse:     Speicherstelle, ab der in Speichereinheit die Teil-Korrekturtabelle abgelegt ist

$O :=$     Zuordnungsinformation zu gerundetem y-Koordinatenwert aus Zuordnungstabelle

$x :=$     gerundeter x-Koordinatenwert des jeweiligen Punkts

Es gibt somit verschiedene Möglichkeiten, wie die neben der Teil-Korrekturtabelle vorgesehene Zuordnungstabelle in dieser Ausführungsform des erfindungsgemäßen Verfahrens konkret ausgebildet sein kann.

Der Speicherbedarf für derart komprimierte Korrekturwerte KW verringert sich gegenüber der unkomprimierten Ablage aller verfügbaren Korrekturwerte KW erheblich. Im erläuterten Beispiel mit Korrekturwerten KW aus einem dreieckförmigen Teilbereich B, der in etwa nur die Hälfte der kompletten Maßverkörperung 10 ausmacht, resultiert ein Speicherbedarf, welcher knapp der Hälfte der vollständigen Korrekturwerte KW zuzüglich des geringen Speicherbedarfs für die Zuordnungstabelle 43.2 entspricht.

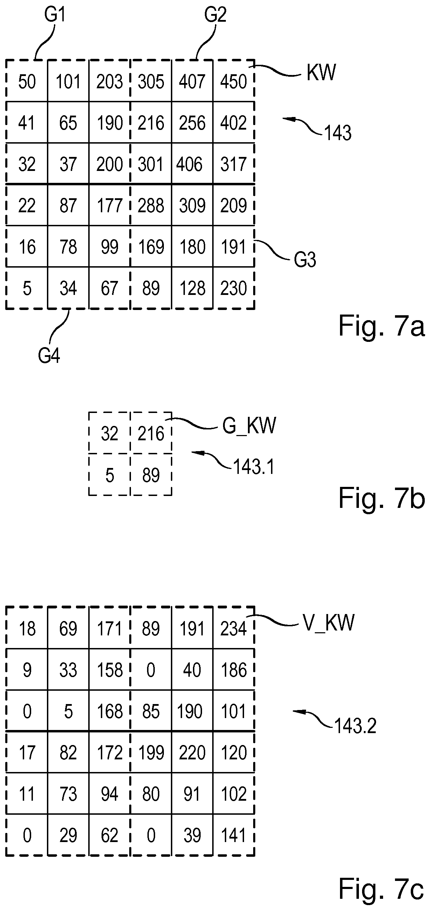

Ein weiteres, zweites Ausführungsbeispiel des erfindungsgemäßen Verfahrens wird anhand der Figuren 6 sowie 7a - 7c erläutert. In dieser Ausführungsform ist nunmehr zur Komprimierung der Korrekturwerte i.w. eine Verringerung der Datenwortbreite der Korrekturwerte vorgesehen. Zur Durchführung des entsprechenden Verfahrens ist wiederum das in Figur 1 gezeigte System geeignet.

Für dieses Ausführungsbeispiel des entsprechenden Verfahrens wird dabei von der Erkenntnis ausgegangen, dass sich üblicherweise die Korrekturwerte innerhalb eines begrenzten räumlichen Bereichs auf der Maßverkörperung nur geringfügig ändern. Dies bedeutet, dass innerhalb dieses Bereichs die Korrekturwerte der Korrekturpunkte nur einen relativ kleinen Wertebereich abdecken. Es wird nunmehr diese Tatsache im vorliegenden zweiten Ausführungsbeispiel des erfindungsgemäßen Verfahrens genutzt, um die Datenwortbreite der Korrekturwerte in einer Korrekturtabelle und damit den erforderlichen Speicherplatz zu reduzieren.

Hierzu wird die Maßverkörperung 10 wie in Figur 6 gezeigt in mehrere, beispielsweise gleich große Teilbereiche B1 - B4 aufgeteilt, in denen sich jeweils die gleiche Anzahl von Korrekturpunkten K befinden, zu denen in der vorhergehenden Kalibrierung Korrekturwerte bestimmt wurden. Die bei der Kalibrierung bestimmten Korrekturwerte sollen z.B. eine Datenwortbreite von 16 Bit bzw. 2 Byte besitzen. Es werden demzufolge mehrere Gruppen von lokal benachbarten Korrekturpunkten K auf der Maßverkörperung 10 gebildet, zu denen Korrekturwerte aus der Kalibrierung vorliegen; im dargestellten Beispiel der Figur 6 ist eine Aufteilung in 4 Gruppen mit jeweils 9 Korrekturpunkten K vorgesehen.

Zu jeder Gruppe bzw. jedem Teilbereich B1 - B4 auf der Maßverkörperung 10 wird aus den ermittelten Korrekturwerten dieser Gruppe dann ein lokaler Gruppen-Korrekturwert gebildet und anschließend die Gruppen-Korrekturwerte in einer Gruppen-Korrekturwerttabelle in der Speichereinheit 43 abgelegt. Der Gruppen-Korrekturwert kann dabei auf verschiedene Art und Weise gebildet bzw. ermittelt werden, z.B. als Mittelwert aus den Maximal- und Minimalwerten der Korrekturwerte einer Gruppe, als mittlerer Korrekturwert einer Gruppe oder aber als niedrigster Korrekturwert einer Gruppe etc..

Daraufhin werden dann die aus der Kalibrierung gewonnenen Korrekturwerte jeder Gruppe mit dem zugehörigen Gruppen-Korrekturwert verrechnet und dabei Verrechnungs-Korrekturwerte für jeden Korrekturpunkt K gebildet. Die derart gewonnenen Verrechnungs-Korrekturwerte besitzen jeweils eine verringerte Datenwortbreite als die ursprünglichen Korrekturwerte aus der Kalibrierung. Zur Verrechnung wird vorzugsweise jeweils die Differenz aus den Korrekturwerten der Kalibrierung und den Gruppen-Korrekturwerten gebildet. Die auf diese Art und Weise gebildeten Verrechnungs-Korrekturwerte mit einer verringerten Datenwortbreite von z.B. lediglich 8 Bit bzw. 1 Byte werden dann in einer Verrechnungs-Korrekturwerttabelle in der Speichereinheit 43 abgelegt. Im Messbetrieb werden mit Hilfe der Verrechnungs-Korrekturwerttabelle und der Gruppen-Korrekturwerttabelle die ermittelten Positionswerte in der Signalkorrektureinheit 42 korrigiert.

Über dieses Vorgehen lässt sich die Datenmenge der für die Korrektur erforderlichen Daten demnach ebenfalls erheblich verringern. So kann wie beispielhaft erläutert die Datenwortbreite in der Verrechnungs-Korrekturwerttabelle halbiert werden. Die daneben noch erforderliche Gruppen-Korrekturwerttabelle trägt im Fall von groß genug gewählten Teilbereichen B1 - B4 nicht mehr wesentlich zur Vergrößerung der erforderlichen Datenmenge für die Korrektur bei, auch wenn in der Gruppen-Korrekturwerttabelle eine Datenwortbreite von nach wie vor 16 Bit vorgesehen wird.

Das zweite Ausführungsbeispiel des erfindungsgemäßen Verfahrens wird nachfolgend anhand der Figuren 7a - 7c weiter erläutert.

Figur 7a zeigt hierbei die in der Korrekturtabelle 143 abgelegten Korrekturwerte KW, wie sie aus der Kalibrierung der Maßverkörperung 10 gewonnen wurden. Zu den insgesamt 36 Korrekturpunkten auf der Maßverkörperung wurden 36 numerische Korrekturwerte KW ermittelt, mit denen die gewonnenen Positionswerte im Messbetrieb verrechnet werden müssen. Im dargestellten Beispiel erstrecken sich die numerischen Korrekturwerte KW über den Bereich [5; 450]. Um diesen Wertebereich als digitale Datenwörter abzudecken sind 16-Bit (2 Byte) Datenwörter erforderlich; über 8-Bit (1 Byte) Datenwörter könnte lediglich der Wertebereich [0; 255] abgedeckt werden. Die Korrekturtabelle 143 dieses stark vereinfachten Beispiels würde demzufolge im unkomprimierten Zustand einen Speicherbedarf von 72 Byte (36 • 2 Byte) erfordern.

Wie in Figur 7a gezeigt, werden vier Gruppen G1 - G4 mit Korrekturwerten KW gebildet, die jeweils zu lokal benachbarten Korrekturpunkten K auf der Maßverkörperung gehören und in der Darstellung in Figur 6 in den gleich großen Bereichen B1 - B4 auf der Maßverkörperung 10 angeordnet sind. In jeder der vier Gruppen wird dann als Gruppen-Korrekturwert G_KW der jeweils niedrigste Korrekturwert KW innerhalb dieser Gruppe bestimmt. Für die Gruppe G1 besitzt demnach der Gruppen-Korrekturwert G_KW den Wert 32, für die Gruppe G2 ist der Gruppen-Korrekturwert G_KW = 216 usw.. Die derart gewonnenen vier Gruppen-Korrekturwerte G_KW werden dann in der Gruppen-Korrekturwerttabelle 143.1 abgelegt, wie dies in Figur 7b schematisch gezeigt ist.

Die in Figur 7c schematisiert dargestellte Verrechnungs-Korrekturwerttabelle 143.2 wird dann gebildet, indem jeder Korrekturwert KW aus der ursprünglichen Korrekturtabelle 143 mit dem zugehörigen Gruppen-Korrekturwert G_KW aus der Gruppen-Korrekturwerttabelle 143.1 verrechnet wird. Die Verrechnung erfolgt in Form einer Differenzbildung. Der in der Verrechnungs-Korrekturwerttabelle 143.2 in Figur 7c links oben ermittelte Verrechnungs-Korrekturwert V_KW = 18 ergibt sich demzufolge gemäß V_KW = KW - G_KW = 50 - 32; analog hierzu erfolgt die Bildung der restlichen Verrechnungs-Korrekturwerte V_KW in der Verrechnungs-Korrekturwerttabelle 143.2.

Die in der Verrechnungs-Korrekturwerttabelle 143.2 auf diese Art und Weise resultierenden Verrechnungs-Korrekturwerte V_KW erstrecken sich nunmehr nur noch über den Wertebereich [0; 234] und können in der Speichereinheit 43 als 8-Bit Datenwörter abgespeichert werden, d.h. mit deutlich geringerem Speicherbedarf als die ursprüngliche Korrekturtabelle 143 aus Figur 7a. Insgesamt ergibt sich damit in der Speichereinheit 43 ein Speicherbedarf von 36 Byte (36 • 1 Byte) für die Verrechnungs-Korrekturwerttabelle 143.2 sowie ein Speicherbedarf von 8 Byte (4 • 2 Byte) für die Gruppen-Korrekturwerttabelle 143.1, also insgesamt ein Speicherbedarf von 44 Byte gegenüber dem Speicherbedarf von 72 Byte der unkomprimierten Korrekturtabelle 143. Im realen Fall mit sehr großen Korrekturtabellen und mehreren Millionen Korrekturwerten wirkt sich dieser Vorteil selbstverständlich noch wesentlich deutlicher aus als im vorliegenden, stark vereinfachten Beispiel.

Die erläuterte Erstellung bzw. Bildung der Gruppen-Korrekturwerttabelle 143.1 sowie der Verrechnungs-Korrekturwerttabelle 143.2 kann sowohl in der Signalverarbeitungseinheit 40 als auch außerhalb von dieser erfolgen. Im Fall der Erstellung außerhalb reduziert sich natürlich aufgrund der geringeren Datenmenge die erforderliche Zeit für die Übertragung der entsprechenden Tabellen zur Speichereinheit 43 in der Signalverarbeitungseinheit 40.

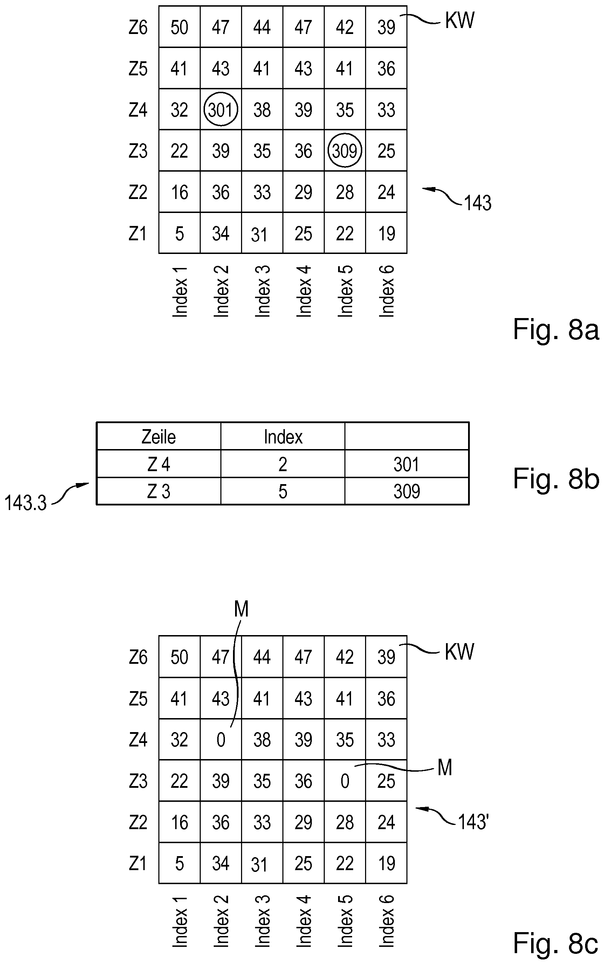

Eine abgewandelte erste Variante der zweiten Ausführungsform des erfindungsgemäßen Verfahrens, die in Verbindung mit dem vorhergehend erläuterten Verfahren eingesetzt werden kann, wird nachfolgend anhand der Figuren 8a - 8c erläutert.

Es kann grundsätzlich vorkommen, dass bei der verwendeten Maßverkörperung an einzelnen Korrekturpunkten Korrekturwerte bei der Kalibrierung ermittelt werden, die sehr stark von den restlichen Korrekturwerten abweichen. Nachfolgend seien derartige Punkte als Extremwert-Korrekturpunkte bezeichnet. Diese können z.B. durch singuläre Defekte in der Maßverkörperung verursacht werden, wie z.B. Poren in der Maßverkörperung. Auch wenn hierbei im Regelfall nur sehr wenige derartige Extremwert-Korrekturpunkte auftreten, hat dies zur Folge, dass bei einer Korrekturwert-Komprimierung gemäß dem zweiten Ausführungsbeispiel eine effektive Reduzierung der Datenwortbreite nicht möglich ist. Es müsste aufgrund der Extremwert-Korrekturpunkte und der zugehörigen Korrekturwerte vielmehr nach wie vor ein großer Wertebereich für die Korrekturwerte in der Verrechnungs-Korrekturwerttabelle abgedeckt werden. Eine wirkliche Verringerung des Speicherbedarfs in der Speichereinheit 43 wäre demzufolge ohne zusätzliche Maßnahmen nicht möglich.

Aus diesem Grund wird in der ersten Variante der zweiten Ausführungsform des erfindungsgemäßen Verfahrens vorgesehen, dass zunächst derartige Extremwert-Korrekturpunkte auf der Maßverkörperung ermittelt werden. Dies erfolgt beispielsweise durch Überprüfen, ob die Korrekturwerte der verschiedenen Korrekturpunkte um einen bestimmten, vorgegebenen Betrag von den Korrekturwerten der benachbarten Korrekturpunkte abweichen.

Sind auf diese Art und Weise die vorhandenen Extremwert-Korrekturpunkte ermittelt, wird in der aus der Kalibrierung gewonnenen Korrekturwerttabelle an diesen Extremwert-Korrekturpunkte jeweils ein Hilfswert abgelegt. Bei diesem Hilfswert kann es sich z.B. um einen vorgegebenen, festen Markerwert handeln, der ansonsten nicht als Korrekturwert vorkommt bzw. mit keinem anderen Korrekturwert in der Verrechnungs-Korrekturwerttabelle übereinstimmt.

Der eigentliche Korrekturwert zum ermittelten Extremwert-Korrekturpunkt $K_X$ wird in einer zusätzlichen Extremwert-Korrekturtabelle abgelegt, um im Messbetrieb zur Korrektur der Positionswerte im Bedarfsfall verfügbar zu sein. Zusammen mit dem Korrekturwert des ermittelten Extremwert-Korrekturpunkt werden in der Extremwert-Korrekturtabelle noch Zuordnungsformationen abgelegt, die angeben zu welchem Korrekturpunkt in der Korrekturtabelle der jeweilige Korrekturwert gehört. Als Korrekturwert für den Extremwert-Korrekturpunkt kann dabei in der Extremwert-Korrekturtabelle der aus der Kalibrierung gewonnene tatsächliche Korrekturwert abgelegt werden; alternativ kann auch ein Extremwert-Verrechnungskorrekturwert an dieser Stelle abgelegt werden, der z.B. aus der Differenz des Korrekturwerts am Extremwert-Korrekturpunkt und einem lokalen Korrekturwert gebildet wird usw..

Im Messbetrieb wird zur Korrektur der Positionswerte im Bedarfsfall dann für den Extremwert-Korrekturpunkt der Korrekturwert aus der Extremwert-Korrekturtabelle verwendet.

Ein stark vereinfachtes Beispiel für diese erste Variante der zweiten Ausführungsform des erfindungsgemäßen Verfahrens wird nachfolgend anhand der Figuren 8a - 8c weiter erläutert.

In Figur 8a sind dabei die für eine zweidimensionale Maßverkörperung bei einer Kalibrierung ermittelten Korrekturwerte KW für 36 Korrekturpunkte gezeigt, die in der bei der Kalibrierung gewonnenen Korrekturtabelle 143 unkomprimiert abgelegt sind. Die Korrekturwerte KW = 301 und KW = 309 an den markierten Positionen Z4 / Index 2 und Z3 / Index 5 weichen wie ersichtlich sehr deutlich von den umliegenden Korrekturwerten KW ab und stellen damit Korrekturwerte zu Extremwert-Korrekturpunkten dar.

Eine Anwendung der vorher erläuterten zweiten Ausführungsform des erfindungsgemäßen Verfahrens würde hier nicht zur angestrebten Verringerung der Datenwortbreite für die abgelegten Korrekturwerte KW führen, da dieses darauf abstellt, dass sich benachbarte Korrekturwerte KW nicht stark voneinander unterscheiden. Es würde damit ohne zusätzliche Maßnahmen keine Komprimierung der Korrekturwerte KW möglich sein, da für den vollständigen Wertebereich der Korrekturwerte KW nach wie vor 16-Bit Datenwörter erforderlich wären.

Es wird daher nach der Bestimmung der beiden Extremwert-Korrekturpunkte eine Extremwert-Korrekturtabelle 143.3 erstellt, die in Figur 8b stark schematisiert dargestellt ist. In dieser sind in der dritten Spalte die beiden Korrekturwerte für die zwei Extremwert-Korrekturpunkte abgelegt; in den beiden vorhergehenden Spalten sind die Zuordnungsinformationen "Zeile" und "Index" abgelegt, die die Zuordnung der beiden Extremwert-Korrekturpunkte zu den entsprechenden Korrekturpunkten auf der Maßverkörperung gemäß der Korrekturtabelle aus Figur 8a charakterisieren.

In der Korrekturtabelle, die dann dem weiteren Vorgehen gemäß dem zweiten Ausführungsbeispiel zugrunde gelegt wird, werden die Korrekturwerte an den beiden Extremwert-Korrekturpunkten durch geeignete Markerwerte M ersetzt. Dies ist in Figur 8c veranschaulicht, die die modifizierte Korrekturtabelle 143' zeigt und bei der die Korrekturwerte KW an den beiden Extremwert-Korrekturpunkte jeweils durch den Markerwert M = 0 ersetzt wurden. Als Markerwert M sollten hier Werte gewählt werden, die mit keinem anderen Korrekturwert KW in der modifizierten Korrekturtabelle 143' übereinstimmen.

Im Messbetrieb greift die Signalkorrektureinheit 42 dann zunächst nur auf die modifizierte Korrekturtabelle 143' zu und prüft, ob die dort eingetragenen Werte ggf. einem Markerwert M entsprechen. Ist dies der Fall, so wird die Extremwert-Korrekturtabelle 143.3 herangezogen, um den eigentlichen Korrekturwert KW zu ermitteln und diesen weiterzuverarbeiten.

Neben der erläuterten ersten Variante der zweiten Ausführungsform des erfindungsgemäßen Verfahrens existieren noch weitere Abwandlungen bzw. Varianten dieser Ausführungsform, von denen einige nachfolgend kurz skizziert seien.

So ist es möglich, die modifizierte Korrekturtabelle 143' aus der vorab erläuterten ersten Variante der zweiten Ausführungsform des erfindungsgemäßen Verfahrens in einer weiteren Variante nochmals weiter zu komprimieren. Dies kann erfolgen, indem auf die modifizierte Korrekturtabelle 143' das oben erläuterte Vorgehen gemäß der zweiten Ausführungsform des erfindungsgemäßen Verfahrens angewendet wird. Das heißt, es werden mehrere Gruppen mit Korrekturwerten innerhalb der modifizierten Korrekturtabelle 143' gebildet, Gruppen-Korrekturwerte bestimmt und in Gruppen-Korrekturwerttabellen abgelegt etc.. Auf diese Art und Weise kann eine nochmalige Verringerung der Datenwortbreite erfolgen.

In einer weiteren Variante ist es alternativ zum erläuterten Vorgehen anhand der Figuren 8a - 8c möglich, dass in der modifizierten Korrekturtabelle 143' an den Extremwert-Korrekturpunkten nicht Markerwerte abgelegt werden, sondern ein Anteil des ermittelten Korrekturwerts für den jeweiligen Extremwert-Korrekturpunkt, nachfolgend erster Anteils-Korrekturwert genannt. Der restliche Anteil des Korrekturwerts, nachfolgend zweiter Anteils-Korrekturwert genannt, wird in der Extremwert-Korrekturtabelle 143.3 abgelegt. Während des Messbetriebs prüft die Signalkorrektureinheit dann für jeden Korrekturpunkt mit Hilfe der Extremwert-Korrekturtabelle 143.3, ob ein Extremwert vorliegt. Ist dies der Fall, so ergibt sich der Korrekturwert für einen derartigen Extremwert-Korrekturpunkt dann aus der Addition des ersten und zweiten Anteils-Korrekturwerts, die in den entsprechenden Korrekturtabellen 143', 143.3 hinterlegt sind.

Sollten ggf. nicht nur an einzelnen Extremwert-Korrekturpunkten besonders abweichende Korrekturwerte KW vorliegen, sondern dies für einen begrenzten Bereich von Korrekturpunkten auf der Maßverkörperung der Fall sein, so ist es in einer weiteren Variante der zweiten Ausführungsform des erfindungsgemäßen Verfahrens möglich in für diese begrenzten Bereiche jeweils eine zusätzliche Extremwert-Korrekturtabelle vorzusehen. In den zusätzlichen Extremwert-Korrekturtabellen werden die Korrekturwerte dann als Datenwörter mit einer großen Datenwortbreite abgelegt. In der eigentlichen Korrekturtabelle sind anstelle der Korrekturwerte für die entsprechenden Bereiche dann wieder geeignete Markerwerte eingetragen.

Neben den konkret beschriebenen Ausführungsbeispielen und diverser Varianten hiervon existieren im Rahmen der vorliegenden Erfindung selbstverständlich noch weitere Ausgestaltungsmöglichkeiten.

So ist beispielsweise auch möglich, die erste und zweite Ausführungsform des erfindungsgemäßen Verfahrens miteinander zu kombinieren. In diesem Fall könnte etwa zunächst ein Vorgehen gemäß der zweiten erläuterten Ausführungsform gewählt werden und Gruppen-Korrekturwerte für entsprechende Teilbereiche ermittelt werden, die in einer Gruppen-Korrekturwerttabelle abgelegt werden. Über die Gruppen-Korrekturwerttabelle ist damit ein üblicherweise rechteckförmiger Bereich der Maßverkörperung erfasst. Anschließend wird dann gemäß dem ersten erläuterten Ausführungsbeispiel vorgegangen und aus allen verfügbaren Korrekturpunkten lediglich ein Teil ausgewählt und eine Teil-Korrekturtabelle sowie eine Zuordnungstabelle erstellt. Im Messbetrieb wird dann zunächst gemäß dem ersten erläuterten Ausführungsbeispiel vorgegangen und dabei die Teil-Korrekturtabelle sowie die Zuordnungstabelle ausgewertet.

Anschließend wird dann der Gruppen-Korrekturwert gemäß dem zweiten Ausführungsbeispiel mit verrechnet.

Desweiteren können ergänzend bzw. in Kombination zu den oben erläuterten Varianten des erfindungsgemäßen Verfahrens auch bekannte Daten-Komprimierungsverfahren aus dem Bereich der Bildverarbeitung eingesetzt werden. So wäre es beispielsweise möglich, in einem Vorverarbeitungsschritt die vorhandene Korrekturtabelle mittels eines verlustbehafteten Daten-Komprimierungsverfahrens zu komprimieren und eine komprimierte Korrekturtabelle zu erstellen, beispielsweise mit Hilfe eines bekannten JPG-Kompressionsverfahrens. Unter Inkaufnahme des dabei resultierenden Genauigkeitsverlusts kann bereits eine hohe Komprimierungsrate erreicht werden, z.B. eine Komprimierungsrate von 10. Anschließend wird dann analog zur oben erläuterten zweiten Ausführungsform des erfindungsgemäßen Verfahrens die Differenz zwischen der ursprünglichen Korrekturtabelle und der komprimierten Korrekturtabelle gebildet und als Differenz-Korrekturtabelle abgespeichert. Da die komprimierte Korrekturtabelle üblicherweise nur gering von der ursprünglichen Korrekturtabelle abweicht, ist der erforderliche Wertebereich der Differenz-Korrekturtabelle gering, d.h. diese lässt sich mit geringer Datenwortbreite und entsprechend geringem Speicherbedarf abspeichern. Im Messbetrieb wird von der Signalkorrektureinheit dann zunächst aus der komprimierten Korrekturtabelle ein Korrekturwert entnommen und zu diesem dann der zugehörige Korrekturwert aus der Differenz-Korrekturtabelle hinzugerechnet.

Ferner ist die vorliegende Erfindung nicht auf die Verwendung zweidimensionaler Auflicht-Maßverkörperungen beschränkt. Über die beschriebenen Verfahren könnten selbstverständlich auch Korrekturwerte zu eindimensionalen Maßverkörperungen, rotatorischen Maßverkörperungen oder Durchlicht-Maßverkörperungen komprimiert werden.

Schließlich wäre darüber hinaus auch noch denkbar, dass das erfindungsgemäße Verfahren in Verbindung mit Positionsmesseinrichtungen eingesetzt wird, die auf nicht-optischen Abtastprinzipien basieren, z.B. in magnetischen, induktiven oder kapazitiven Positionsmesseinrichtungen usw..

**Patentansprüche**

1. Verfahren zur Fehlerkorrektur in Positionsmesseinrichtungen mit Maßverkörperungen (10), die von mindestens einer Abtasteinheit (20) abgetastet werden, wobei für eine definierte Anzahl von Korrekturpunkten (K') auf der Maßverkörperung (10) jeweils Korrekturwerte (KW) bereitgehalten werden, die aus einer vor dem Messbetrieb erfolgenden Kalibrierung gewonnen und im Messbetrieb zur Korrektur der ermittelten Positionswerte verwendet werden,

   **dadurch gekennzeichnet,**

   **dass** die bei der Kalibrierung gewonnenen Korrekturwerte (KW) für den Messbetrieb komprimiert werden, wobei zur Komprimierung der aus der Kalibrierung gewonnenen Korrekturwerte (KW)

   - lediglich zu einem Teil der verfügbaren Korrekturpunkte (K') auf der Maßverkörperung (10) die jeweils zugehörigen Korrekturwerte (KW) ausgewählt und in einer Teil-Korrekturtabelle (43.1) abgelegt werden und
   - in einer Zuordnungstabelle (43.2) Zuordnungsinformationen abgelegt werden, über die im Messbetrieb eine Zuordnung der in der Teil-Korrekturtabelle (43.1) abgelegten Korrekturwerte (KW) zu den Korrekturpunkten (K') vorgenommen wird und
   - lediglich zu denjenigen Korrekturpunkten (K') auf der Maßverkörperung (10) Korrekturwerte (KW) ausgewählt und in der Teil-Korrekturtabelle (43.1) abgelegt werden, die in einem Teilbereich der Maßverkörperung (10) liegen, der im Messbetrieb von der Abtasteinheit (20) abgetastet wird.

2. Verfahren nach Anspruch 1, **dadurch gekennzeichnet, dass** der Teilbereich auf der Maßverkörperung (10) eine nicht-rechteckförmige Kontur aufweist oder die Maßverkörperung (10) eine nicht-rechteckförmige Kontur aufweist.

3. Verfahren nach Anspruch 1, **dadurch gekennzeichnet, dass** die Teil-Korrekturtabelle (43.1) und die Zuordnungstabelle (43.2) in einer Speichereinheit (43) abgelegt werden, auf die eine Signalkorrektureinheit (42) im Messbetrieb zugreift, um die ermittelten Positionsmesswerte zu korrigieren und zur Weiterverarbeitung bereitzustellen.

4. Verfahren nach Anspruch 3, **dadurch gekennzeichnet, dass** über die in der Zuordnungstabelle (43.1) abgelegten Zuordnungsinformationen jeweils die Speicherstelle (S) in der Speichereinheit (43) angegeben wird, an der die Korrekturwerte (KW) der ausgewählten Korrekturpunkte (K') abgelegt sind.

5. Verfahren nach Anspruch 4, **dadurch gekennzeichnet, dass** im Messbetrieb über eine Zuordnungsvorschrift zu einer gegebenen Position auf der Maßverkörperung (10) die Speicherstelle (S) des Korrekturwerts (KW) mindestens eines nächst- oder umliegenden Korrekturpunkts (K') in der Teil-Korrekturtabelle (43.1) bestimmt wird.

6. Verfahren zur Fehlerkorrektur in Positionsmesseinrichtungen mit Maßverkörperungen (10), die von mindestens einer Abtasteinheit (20) abgetastet werden, wobei für eine definierte Anzahl von Korrekturpunkten (K') auf der Maßverkörperung (10) jeweils Korrekturwerte (KW) bereitgehalten werden, die aus einer vor dem Messbetrieb erfolgenden Kalibrierung gewonnen und im Messbetrieb zur Korrektur der ermittelten Positionswerte verwendet werden,
**dadurch gekennzeichnet,**
**dass** die bei der Kalibrierung gewonnenen Korrekturwerte (KW) für den Messbetrieb komprimiert werden, wobei zur Komprimierung die Datenwortbreite der Korrekturwerte (KW) reduziert wird und

- mehrere Gruppen (G1 - G4) von lokal benachbarten Korrekturpunkten (K) auf der Maßverkörperung (10) gebildet werden, zu denen jeweils Korrekturwerte (KW) aus der Kalibrierung vorhanden sind und
- pro Gruppe (G1 - G4) ein lokaler Gruppen-Korrekturwert (G_KW) bestimmt wird und die Gruppen-Korrekturwerte (G_KW) in einer Gruppen-Korrekturwerttabelle (143.1) abgelegt werden und
- die über die Kalibrierung gewonnenen Korrekturwerte (KW) jeder Gruppe (G1 - G4) mit dem jeweils zugehörigen Gruppen-Korrekturwert (G_KW) verrechnet werden und dabei Verrechnungs-Korrekturwerte (V_KW) mit verringerter Datenwortbreite gebildet und in einer Verrechnungs-Korrekturwerttabelle (143.2) abgelegt werden und
- im Messbetrieb über die Verrechnungs-Korrekturwerttabelle (143.2) und die Gruppen-Korrekturwerttabelle (143.1) die ermittelten Positionswerte korrigiert werden.

7. Verfahren nach Anspruch 6, **dadurch gekennzeichnet, dass** als Gruppen-Korrekturwert (G_KW) der niedrigste Korrekturwert (KW) in der Gruppe (G1 - G4) oder der mittlere Korrekturwert in der Gruppe (G1 - G4) oder der Mittelwert aus den Maximal- und Minimalwerten der Korrekturwerte (KW) einer Gruppe (G1 - G4) bestimmt wird.

8. Verfahren nach Anspruch 6, **dadurch gekennzeichnet, dass** zur Verrechnung der Korrekturwerte (KW) mit dem jeweils zugehörigen Gruppen-Korrekturwert (G_KW) eine Differenzbildung erfolgt.

9. Verfahren nach Anspruch 6, **dadurch gekennzeichnet, dass** desweiteren

- mindestens ein Extremwert-Korrekturpunkt auf der Maßverkörperung (10) ermittelt wird, dessen zugehöriger Korrekturwert (KW) um einen definierten Betrag von den Korrekturwerten (KW) der benachbarten Korrekturpunkte (K) abweichen und
- in der Verrechnungs-Korrekturwerttabelle (143.2) für den Extremwert-Korrekturpunkt anstelle des Korrekturwerts (KW) ein Hilfswert abgelegt wird und
- Zuordnungsinformationen zum Extremwert-Korrekturpunkt zusammen mit Korrekturwerten (KW) des Extremwert-Korrekturpunkts in einer Extremwert-Korrekturtabelle (143.3) abgelegt werden, wobei über die Zuordnungsinformationen im Messbetrieb eine Zuordnung von abgelegten Korrekturwerten (KW) zu Extremwert-Korrekturpunkten erfolgt.

10. Verfahren nach Anspruch 9, **dadurch gekennzeichnet, dass** als Hilfswert in der Verrechnungs-Korrekturwerttabelle (143.2) ein Markerwert (M) abgelegt wird, der mit keinem anderen Korrekturwert (KW) übereinstimmt.

11. Verfahren nach Anspruch 9, **dadurch gekennzeichnet, dass** als Korrekturwert für den Extremwert-Korrekturpunkt der aus der Kalibrierung gewonnene Korrekturwert (KW) oder ein Extremwert-Verrechnungskorrekturwert in der Extremwert-Korrekturtabelle (143.3) abgelegt wird.

12. Positionsmesseinrichtung mit einer zweidimensionalen Maßverkörperung, **gekennzeichnet dadurch, dass** sie zur Durchführung eines Verfahrens nach mindestens einem der vorhergehenden Ansprüche ausgebildet ist.

**Claims**

1. Method for error correction in position measuring devices having measuring standards (10), which are scanned by at least one scanning unit (20), wherein correction values (KW) are kept ready for each of a defined number of correction points (K') on the measuring standard (10), which correction values are obtained from a calibration performed before the measuring operation and are used in measuring operation for correcting the ascertained position values,
   **characterized in that** the correction values (KW) obtained during the calibration are compressed for the measuring operation, wherein to compress the correction values (KW) obtained from the calibration

   - the respective associated correction values (KW) are selected and saved in a partial correction table (43.1) for only a part of the available correction points (K') on the measuring standard (10) and
   - items of assignment information are saved in an assignment table (43.2), via which, in measuring operation, an assignment of the correction values (KW) saved in the partial correction table (43.1) to the correction points (K') is performed and
   - correction values (KW) are only selected and saved in the partial correction table (43.1) for the correction points (K') on the measuring standard (10) which are located in a subregion of the measuring standard (10) which is scanned by the scanning unit (20) in measuring operation.

2. Method according to Claim 1, **characterized in that** the subregion on the measuring standard (10) has a non-rectangular contour or the measuring standard (10) has a non-rectangular contour.

3. Method according to Claim 1, **characterized in that** the partial correction table (43.1) and the assignment table (43.2) are saved in a memory unit (43), which a signal correction unit (42) accesses in measuring operation to correct the ascertained position measured values and provide them for further processing.

4. Method according to Claim 3, **characterized in that** the memory point (S) in the memory unit (43), at which the correction values (KW) of the selected correction points (K') are saved, is indicated in each case via the items of assignment information saved in the assignment table (43.1).

5. Method according to Claim 4, **characterized in that** in measuring operation, via an assignment rule to a given position on the measuring standard (10), the memory point (S) of the correction value (KW) of at least one closest or surrounding correction point (K') in the partial correction table (43.1) is determined.

6. Method for error correction in position measuring devices having measuring standards (10), which are scanned by at least one scanning unit (20), wherein correction values (KW) are kept ready for a defined number of correction points (K') on the measuring standard (10), which correction values are obtained from a calibration performed before the measuring operation and are used in measuring operation for correcting the ascertained position values,
   **characterized in that** the correction values (KW) obtained during the calibration are compressed for the measuring operation, wherein the data word width of the correction values (KW) is reduced for the compression and

   - multiple groups (G1 - G4) of locally adjacent correction points (K) on the measuring standard (10) are formed, for each of which correction values (KW) from the calibration are present and
   - one local group correction value (G_KW) is determined per group (G1 - G4) and the group correction values (G_KW) are saved in a group correction value table (143.1) and
   - the correction values (KW) of each group (G1 - G4) which are obtained via the calibration are offset using the respective associated group correction value (G_KW) and in this case offset correction values (V_KW) having decreased data word width are calculated and are saved in an offset correction value table (143.2) and
   - the ascertained position values are corrected in measuring operation via the offset correction value table (143.2) and the group correction value table (143.1).

7. Method according to Claim 6, **characterized in that** the lowest correction value (KW) in the group (G1 - G4) or the mean correction value in the group (G1- G4) or the mean value of the maximum and minimum values of the correction values (KW) of a group (G1 - G4) is determined as the group correction value (G_KW).

8. Method according to Claim 6, **characterized in that** a difference calculation is performed to offset the correction values (KW) using the respective associated group correction value (G_KW).

9. Method according to Claim 6, **characterized in that** furthermore

- at least one extreme value correction point is ascertained on the measuring standard (10), the associated correction value (KW) of which deviates by a defined absolute value from the correction values (KW) of the adjacent correction points (K) and
- an auxiliary value is saved in the offset correction value table (143.2) for the extreme value correction point instead of the correction value (KW) and
- items of assignment information for the extreme value correction point are saved together with correction values (KW) of the extreme value correction point in an extreme value correction table (143.3), wherein an assignment of saved correction values (KW) to extreme value correction points is performed via the items of assignment information in measuring operation.

10. Method according to Claim 9, **characterized in that** a marker value (M), which does not correspond to any other correction value (KW), is saved as the auxiliary value in the offset correction value table (143.2).

11. The method according to Claim 9, **characterized in that** the correction value (KW) obtained from the calibration or an extreme value offset correction value is saved in the extreme value correction table (143.3) as the correction value for the extreme value correction point.

12. Position measuring device having a two-dimensional measuring standard, **characterized in that** it is designed to carry out a method according to at least one of the preceding claims.

**Revendications**

1. Procédé de correction d'erreurs dans des dispositifs de mesure de position comportant des échelles de mesure (10) qui sont balayées par au moins une unité de balayage (20), dans lequel des valeurs de correction (KW) sont respectivement conservées pour un nombre défini de points de correction (K') sur l'échelle de mesure (10), lesquelles valeurs de correction sont obtenues à partir d'un étalonnage effectué avant le mode de mesure et sont utilisées lors dans le mode de mesure pour corriger les valeurs de position déterminées, **caractérisé en ce que** les valeurs de correction (KW) obtenues lors de l'étalonnage sont comprimées pour comprimer les valeurs de correction (KW) obtenues à partir de l'étalonnage,

- seules les valeurs de correction (KW) respectivement associées à une partie des points de correction (K') disponibles sur l'échelle de mesure (10) sont sélectionnées et sont stockées dans une table de correction partielle (43.1), et
- des informations d'association sont stockées dans une table d'association (43.2), par l'intermédiaire desquelles, dans le mode de mesure, une association des valeurs de correction (KW) stockées dans la table de correction partielle (43.1) avec les points de correction (K') est effectuée, et
- des valeurs de correction (KW) sont sélectionnées sur l'échelle de mesure (10) et sont stockées dans la table de correction partielle (43.1) uniquement pour les points de correction (K') qui se situent dans une zone partielle de l'échelle de mesure (10) balayée dans le mode de mesure par l'unité de balayage (20).

2. Procédé selon la revendication 1, **caractérisé en ce que** la zone partielle sur l'échelle de mesure (10) présente un contour non rectangulaire ou l'échelle de mesure (10) présente un contour non rectangulaire.

3. Procédé selon la revendication 1, **caractérisé en ce que** la table de correction partielle (43.1) et la table d'association (43.2) sont stockées dans une unité de stockage (43) à laquelle une unité de correction de signal (42) a accès dans le mode de mesure afin de corriger les valeurs de position déterminées et de permettre un post-traitement.

4. Procédé selon la revendication 3, **caractérisé en ce que** l'emplacement de stockage (S) dans l'unité de stockage (43) où sont respectivement stockées les valeurs de correction (KW) des points de correction sélectionnés (K') est indiqué par l'intermédiaire d'informations d'association stockées dans la table d'association (43.1).

5. Procédé selon la revendication 4, **caractérisé en ce que** l'emplacement de stockage (S) de la valeur de correction (KW) d'au moins un point de correction (K') suivant ou voisin dans la table de correction partielle (43.1) est déterminé dans le mode de mesure par l'intermédiaire d'une instruction d'association à une position donnée sur l'échelle de mesure (10).

6. Procédé de correction d'erreurs dans des dispositifs de mesure de position comportant des échelles de mesure (10) qui sont balayées par au moins une unité de balayage (20), dans lequel, pour un nombre défini de points de correction (K') sur l'échelle de mesure (10), des valeurs de correction (KW) sont respectivement conservées, lesquelles valeurs de correction sont obtenues à partir d'un étalonnage effectué avant le mode de mesure et sont utilisées dans le mode de mesure pour corriger les valeurs de position déterminées,
**caractérisé en ce que** les valeurs de correction (KW) obtenues lors de l'étalonnage sont comprimées pour le mode de mesure, dans lequel la largeur des mots de données des valeurs de correction (KW) est réduite pour la compression, et

- plusieurs groupes (G1-G4) de points de correction (KW) adjacents locaux sont formés sur l'échelle de mesure (10), pour lesquels des valeurs de correction (KW) provenant de l'étalonnage sont respectivement présentes, et
- pour chaque groupe (G1-G4), une valeur de correction de groupe locale (G_KW) est déterminée et les valeurs de correction de groupe (G_KW) sont stockées dans une table de valeurs de correction de groupe (143.1), et
- les valeurs de correction (KW) obtenues par l'intermédiaire de l'étalonnage de chaque groupe (G1-G4) sont respectivement compensées par la valeur de correction de groupe (G_KW) associée et les valeurs de correction de compensation (V_KW) sont ainsi calculées avec une largeur de mot de données réduite et sont stockées dans une table de valeurs de correction de compensation (143.2), et
- dans le mode de mesure, les valeurs de position déterminées sont corrigées par l'intermédiaire de la table de valeurs de correction de compensation (143.2) et de la table de valeurs de correction de groupe (143.1).

7. Procédé selon la revendication 6, **caractérisé en ce que** la valeur de correction (KW) la plus faible des groupes (G1 - G4) ou la valeur de correction moyenne dans le groupe (G1 - G4) ou la valeur moyenne des valeurs maximale et minimale des valeurs de correction (KW) d'un groupe (G1 - G4) est déterminée en tant que valeur de correction de groupe (G_KW).

8. Procédé selon la revendication 6, **caractérisé en ce qu'**un calcul de différence est effectué pour compenser les valeurs de correction (KW) avec la valeur de correction de groupe (G_KW) respectivement associée.

9. Procédé selon la revendication 6, **caractérisé en outre en ce que** :

- au moins un point de correction de valeur extrême est déterminé sur l'échelle de mesure (10), dont la valeur de correction (KW) associée s'écarte d'une quantité définie des valeurs de correction (KW) des points de correction (KW) voisins, et
- une valeur auxiliaire est stockée dans la table de valeurs de correction de compensation (143.2) pour le point de correction de valeur extrême au lieu de la valeur de correction (KW), et
- des informations d'association avec le point de correction de valeur extrême sont stockées en association avec des valeurs de correction (KW) du point de correction de valeur extrême dans une table de correction de valeur extrême (143.3), dans lequel une association de valeurs de correction stockées (KW) avec des points de correction de valeur extrême est effectuée dans le mode de mesure par l'intermédiaire des informations d'association.

10. Procédé selon la revendication 9, **caractérisé en ce qu'**une valeur de repère (M) ne correspondant à aucune autre valeur de correction (KW) est stockée en tant que valeur auxiliaire dans la table de valeurs de correction de compensation (143.2).

11. Procédé selon la revendication 9, **caractérisé en ce que** la valeur de correction (KW) obtenue à partir de l'étalonnage ou une valeur de correction de compensation de valeur extrême est stockée dans la table de correction de valeur extrême (143.3) en tant que valeur de correction pour le point de correction de valeur extrême.

12. Dispositif de mesure de position comportant une échelle de mesure bidimensionnelle, **caractérisé en ce qu'**il est réalisé pour mettre en oeuvre un procédé selon au moins l'une des revendications précédentes.

Fig. 1

Fig. 2

Fig. 3

Fig. 4a

Fig. 4b

S → | 1 | 2 | 3 | 4 | 5 | 6 | 7 | 8 | 9 | 10 | 11 | 12 | 13 | 14 | 15 | 16 | 17 | 18 | 19 | 20 | 21 |

KW — 43.1

Z1  Z2  Z3  Z4  Z5  Z6

Fig. 5a

EP 3 001 151 B1

| | Offset | Startindex |
|---|---|---|
| Z1 | 1 | 6 |
| Z2 | 2 | 5 |
| Z3 | 4 | 4 |
| Z4 | 7 | 3 |
| Z5 | 11 | 2 |
| Z6 | 16 | 1 |

43.2

Fig. 5b

Fig. 6

Fig. 7a

Fig. 7b

Fig. 7c

|     | Index 1 | Index 2 | Index 3 | Index 4 | Index 5 | Index 6 |     |
|-----|---------|---------|---------|---------|---------|---------|-----|
| Z6  | 50      | 47      | 44      | 47      | 42      | 39      | KW  |
| Z5  | 41      | 43      | 41      | 43      | 41      | 36      |     |
| Z4  | 32      | (301)   | 38      | 39      | 35      | 33      |     |
| Z3  | 22      | 39      | 35      | 36      | (309)   | 25      |     |
| Z2  | 16      | 36      | 33      | 29      | 28      | 24      | 143 |
| Z1  | 5       | 34      | 31      | 25      | 22      | 19      |     |

Fig. 8a

| Zeile | Index |     |
|-------|-------|-----|
| Z 4   | 2     | 301 |
| Z 3   | 5     | 309 |

143.3

Fig. 8b

M

|     | Index 1 | Index 2 | Index 3 | Index 4 | Index 5 | Index 6 |      |
|-----|---------|---------|---------|---------|---------|---------|------|
| Z6  | 50      | 47      | 44      | 47      | 42      | 39      | KW   |
| Z5  | 41      | 43      | 41      | 43      | 41      | 36      |      |
| Z4  | 32      | 0       | 38      | 39      | 35      | 33      |      |
| Z3  | 22      | 39      | 35      | 36      | 0       | 25      | M    |
| Z2  | 16      | 36      | 33      | 29      | 28      | 24      | 143' |
| Z1  | 5       | 34      | 31      | 25      | 22      | 19      |      |

Fig. 8c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008105026 A1
- EP 0042917 A2
- EP 1762828 A2